# EUROPEAN PATENT SPECIFICATION

(11) **EP 2 101 945 B1**
(45) Date of publication and mention of the grant of the patent: **21.08.2013**
(21) Application number: 08705044.9
(22) Date of filing: 08.01.2008
(51) Int. Cl.: B23B 45/00, B23Q 11/00, B24B 23/02, B24B 55/00, B25F 5/00

(54) **ELECTRICAL MACHINE TOOL, SUCH AS AN ANGLE GRINDER, WITH SPINDLE BLOCKING DEVICE**
ELEKTROWERKZEUG, WIE EIN WINKELSCHLEIFER, MIT EINER VORRICHTUNG ZUM BLOCKIEREN DER ANTRIEBSSPINDEL
MACHINE-OUTIL ÉLECTRIQUE, TELLE QU'UNE MEULEUSE D'ANGLE, AVEC UN DISPOSITIF DE BLOCAGE DE BROCHE

(30) Priority: 08.01.2007 NL 1033187
(43) Date of publication of application: 23.09.2009
(73) Proprietor: Robert Bosch GmbH, 70469 Stuttgart (DE)
(72) Inventor: MOERBEEK, Ruben, Jan, NL-4827 PE Breda (NL)
(74) Representative: Grootscholten, Johannes A.M.
(86) International application number: PCT/NL2008/000006
(87) International publication number: WO 2008/085029

(56) References cited:
- EP-A- 0 890 420
- EP-A- 1 166 973
- EP-A1- 0 612 589
- EP-A2- 0 319 813
- DE-A1- 3 001 907
- DE-A1- 3 313 704
- DE-C1- 10 227 983
- US-A- 4 434 586
- US-A1- 2002 123 301

## Description

The invention relates to an electrical machine tool, such as an angle grinder, drilling machines, circular saws or milling devices, wherein a drive drives a processing means, such as a grinding disc or a drill, by means of rotation via a spindle.

In such electrical tools it is desirable to change the processing means mounted on the spindle. It is desirable here to block the spindle so that the replacement can be readily carried out. According to the prior art the electrical tool is provided with a blocking means for blocking the rotation of the spindle or the spindle assembly.

An example of such a blocking device is shown in EP 1 327 497, wherein a blocking means with a pin can be placed in a recess of the spindle or spindle assembly, whereby the rotation of the spindle is blocked.

As a further example of the prior art, reference is made here to DE-3313704 and/or US-4434586, which are considered to constitute the closest prior art in relation to the present invention and relative to which at least the features in the characterizing portion of the appended independent claim are novel.

The invention has for its object to further improve such a tool, and in particular to prevent damage resulting from incorrect use of the blocking device.

This object is achieved with a tool exhibiting all features according to appended independent claim 1. Such a tool will not be damaged when the blocking device is used incorrectly, for instance when the blocking is operated while the drive is switched on.

The electrical machine tool according to the invention preferably comprises a housing. The housing preferably forms a receiving space in which a drive can be accommodated. The housing encloses the internal parts. The housing can consist of two or more plastic or metal cast components. The drive can be an electrical drive which can be connected to a power supply. The power supply can be a power supply such as a fixed mains supply, such as via a cord, but can also be a power supply in the form of a battery which can be coupled to the tool.

Further, the drive can be coupled to a spindle to which a processing means can be coupled. The processing means is preferably a grinding disc or polishing means, a drill, a bit, a cutter or a circular saw. Such processing means are replaceable so that, depending on the desired processing, the correct size of the processing means can be selected. The spindle transmits the drive to the processing means. The spindle is for instance bearing-mounted in the housing. A transmission can be arranged between the drive and the spindle.

According to the invention the tool further comprises an on/off switch. The switch is preferably placed in or on the housing. The switch can be manually operated from outside. The switch is coupled to the drive for the purpose of on/off switching of the drive.

Different types of on/off switches are possible according to the prior art. An example of an on/off switch is a push-button biased toward the off position which can be operated with a finger of the hand of the user.

The tool further has a blocking means for the spindle. The blocking means according to the invention preferably comprises a button which can be operated by a user, and preferably has a pin which is movable between a first and a second position whereby the spindle can be placed into respectively an unlocked and a locked position. In an embodiment a pin is used which engages on the spindle, thereby creating a great friction force. This action is comparable to that of a brake. Such an embodiment brakes the rotation of the spindle and brings it to a stop. A pin according to the invention is a movable element coupled to an operating element. Locking/unlocking occurs due to movement. The skilled person is able to embody the pin in more diverse ways.

In another embodiment the pin is received in a recess of the spindle, thereby preventing rotation of the spindle around the axis. Such an engagement is recommended since a great moment of force and a fixed blocking are hereby obtained using a simple mechanism.

According to the invention the on/off switch is coupled via a coupling means to the blocking means. The positions of the on/off switch and of the blocking means can in this way be related to each other. According to the invention the coupling means is adapted to prevent the drive being switched on at the same time as the blocking means are blocked. This provides the considerable advantage that when a drive is switched on, wherein the spindle rotates, it cannot be simultaneously blocked by operating the blocking device, thereby preventing damage, for instance the pin breaking off or the drive burning out when the blocking means is operated. It is possible during processing with the tool for the blocking means to be operated by jolting without the user wishing this. Because the coupling means prevents operation when the tool is switched, no damage will now occur. An action is hereby obtained which is for instance the reverse of the action of an emergency brake. The blocking device according to the invention cannot be used as emergency brake when the drive is still switched on.

An embodiment comprises an electronic protection. The mechanical protection is preferred because movable and controllable elements are hereby obtained which can be secured in a determined switching position.

The electrical machine tool according to the invention further exhibits the feature that the blocking means forms with the pin in the second position a protection against the drive being switched on, and in this situation blocks switch-on of the drive with the on/off switch via the coupling means. A further improvement in safety can thus be realized. The tool has the further feature of an unblocking means associated with the blocking means. The blocking means must then be actively taken out of operation using the unblocking means, and only then is switch-on of the motor allowed. Unintended contact with the on/off switch will then with certainty not be able to result in the drive or motor being set into operation, particularly not if a user is still engaged in replacing a processing means such as a saw blade or grinding disc and has actuated the blocking means for this purpose.

The unblocking means can be adapted for selectively enabling switch-on of the drive. It is then further or alternatively also possible within the scope of the invention for the unblocking means to be adapted to act selectively - directly or indirectly - on the pin in order to move this latter selectively and actively into the first position.

The coupling means is preferably further adapted to block displacement of the pin from the first to a second position when the drive is switched on. Operation of blocking means is hereby prevented in the switched-on position.

According to a further embodiment, the coupling means is adapted, when the drive is switched on, to switch the pin from the second position to the first position in the locked position of the spindle. This ensures that switching on of the drive is prevented when a spindle is blocked, and that the device is automatically unlocked.

The coupling means is preferably adapted to block displacement of the pin from the first position to the second position in the switched-on position as well as to switch the pin from the second position to the first position during switch-on. Two possible positions are combined with such a coupling means.

In another embodiment the coupling means is adapted to block switch-on of the drive in the locked position of the spindle. This enhances safety because switch-on is not permitted. When the blocking is activated, and the spindle is locked, for instance for the purpose of replacing the processing means coupled to the spindle, switch-on of the drive, and thus of the spindle, is prevented.

According to an embodiment the coupling means is adapted, when the drive is switched on, to place the switch in the switched-off position and thereby switch off the drive when the blocking means is operated, particularly when the movement from the first to the second position is beginning or has just begun. The drive is switched off before the second position is reached. The spindle can hereby be slowed and/or stopped with the blocking device. The blocking device can then still function as emergency brake. This prevents a switched-on drive and a blocked spindle resulting in for instance burn-out.

In a preferred embodiment the on/off switch is a slide switch. The coupling means is preferably a slidable element. Owing to the sliding the coupling means, for instance embodied as a rod, can be arranged movably in the housing in a suitable guide therefor and can herein be displaced to a position in which the blocking means is blocked. The coupling means is particularly displaced when the drive is switched on such that the blocking means cannot be moved from the unlocked position to the locked position.

It is particularly advantageous to arrange the coupling means for movement in a path of the pin. The path of the pin can be blocked by sliding of the coupling means. This prevents movement of the pin, and switching between the positions is blocked. The pin can also be embodied such that movement of the coupling means in the path of the pin is blocked in one of the two positions, in particular in the locked position.

In a preferred embodiment the spindle is provided with a recess in which the pin can be received. A simple but effective blocking mechanism is hereby obtained.

It is further recommended that the blocking means has an element for holding the pin releasably in the second position, and that the coupling means is adapted to unblock the blocking means from the second position, in particular to break the engagement by the element. An automatic unlocking can hereby take place, for instance when the drive is switched on. The element for holding the pin releasably in the second position is preferably a hooking element, preferably a resilient element such as a leaf spring. The blocking means can hereby be hooked and secured in the second position, and unblocking can take place easily. Together with the element the blocking means can comprise a biasing means adapted to bias the blocking means, and in particular the pin, to the unlocked position or the first position.

It is a further advantage that the coupling means comprises a movable element, preferably a sliding element, which is adapted to engage the hooking element and to unblock the blocking means when the drive is switched on. The hooking element can in particular be pushed out of its hooking position.

In a preferred embodiment the electrical tool comprises a spindle provided with teeth on a side thereof on which the drive can engage. Particularly in the case of an angle grinder a change in the rotation axis can hereby take place. The rotation axis of the drive is preferably at right angles to the rotation axis of the spindle.

It is further advantageous to embody the blocking means with a biasing means, such as a resilient means, which biases the pin to the first position. A blocking means is hereby obtained which has a preferred position, i.e. the first position, in which the spindle is unlocked. Preferably in combination with the coupling means the pin can be moved out of the second position when the drive is switched on, for instance by influencing the hooking element, and the biasing means will return the pin to the first position. In another embodiment a biasing means is present which biases the blocking means to the locked position.

Further advantages of the invention will become apparent as a result of the following description of several exemplary embodiments. The invention is however not limited to be shown embodiments, nor is it limited to the further stated advantages. The invention can relate to measures indicated in the description or shown in the figures, the advantages of which are implicitly or explicitly stated.

The figures show a number of embodiments of the electrical machine tool according to the invention, in which:
- figure 1: shows a perspective view of a first embodiment of a tool according to the invention,
- figures 2-4: show a cross-section of the embodiment of fig. 1 ,
- figures 5-8: show a cross-section of a second embodiment of a tool according to the invention,
- figures 9-11: show a cross-section of a third embodiment of a tool according to the invention.

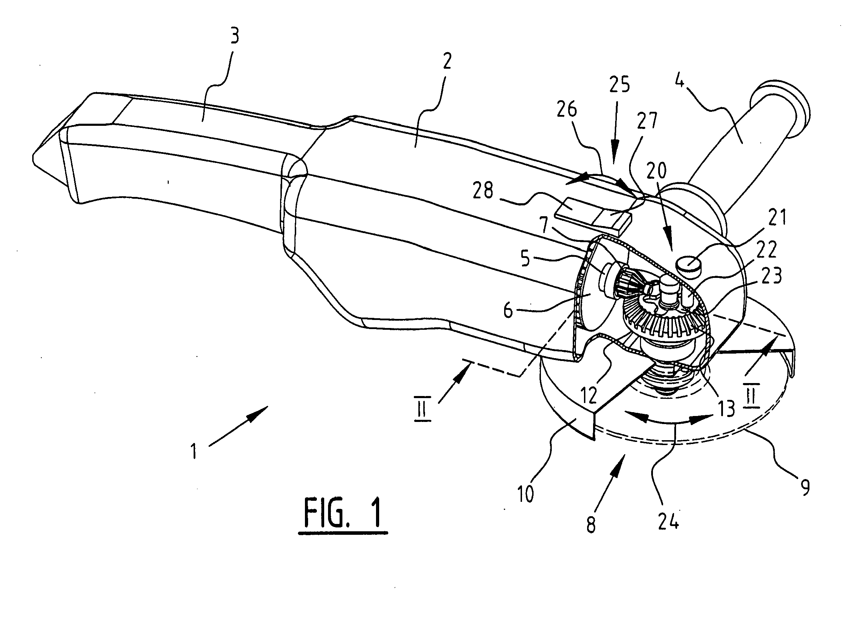

Figure 1 shows a perspective view of a partly cut-away device 1 according to the invention. The embodiment shown in figure 1 is an angle grinder comprising a housing 2, this housing comprising at least one part 3 which can be grasped with the hand of a user. Also connected to the housing is a handle 4 which can be gripped with a second hand.

The housing is at least partially hollow and a drive (not shown) can be accommodated in this space of the housing. Of the drive is visible the shaft 5 to which a fan 6 is connected, and a tooth 7 is placed on the outer end of the shaft.

Tool 1 can be provided with a battery or can have a cord which can be connected to a power supply. The electrical tool can be used to process a material. The angle grinder is provided with an interchangeable processing means, here a disc 8, a cutting edge 9 of which is shown. Disc 8 is accommodated in a guard 10. Only a part of the disc is free. The disc can be held in place with a quick-action mechanism. Details hereof will be omitted and reference is made to the general prior art. Disc 8 can be driven via toothing 7 via a spindle 12 which has a toothing 13. Spindle 7 is bearing-mounted in the housing. The housing is partially cut-away at spindle 12.

Further shown is a blocking device 20 which protrudes outside housing 2 on the front side of the housing. The blocking device has a button 21 which can be operated manually. The blocking device comprises a pin 22 which can be received in a recess 23 of the spindle. Rotation of the spindle as according to arrow 24 will hereby be blocked. Blocking device 20 is operated by pressing button 21. The blocking device is accommodated slidably in the housing in suitable manner.

The housing is further provided with an on/off switch 25 which is switched on in the shown position. By placing the on/off switch 25 in the switched-on position the power supply is connected to the drive, which can then be rotated and can rotate spindle 12 as according to arrow 24 via toothed wheels 7. In the shown embodiment the on/off switch is a switch pivoting as according to arrow 26 and can be operated manually. It has two operating surfaces 27,28, wherein operating of the one surface results in switch-on and operating of the other surface results in switch-off. Another embodiment comprises a slide switch.

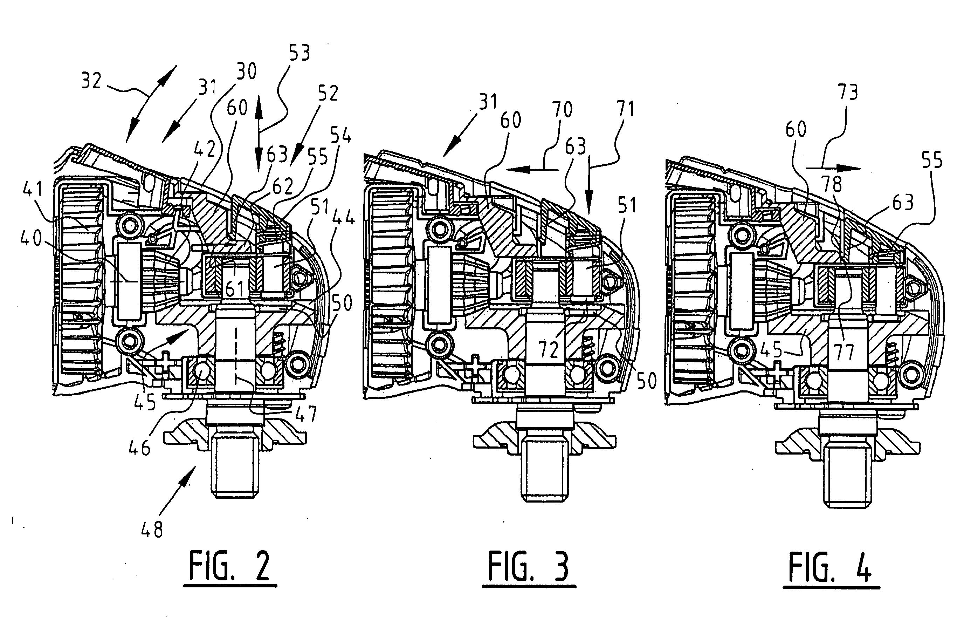

Figure 2 shows a cross-section along II-II in figure 1 of an embodiment of a front end of an exemplary angle grinder. Accommodated in housing 30 is a switch 31 with which a drive (not shown) can be switched on or off. The switch is pivotable as according to arrow 32 and can be operated with the finger of a user. The switches protrude outward through housing 30.

Via a suitable connection the on/off switch is connected to the drive which has a rotation shaft 40. The shaft of the drive is for instance connected to the fan 41 and to toothed wheel 42. The shaft is bearing-mounted in the housing. Toothing 42 engages on teeth 44 of spindle 45 which is accommodated via bearings 46 in a housing and which has a rotation axis 47. The spindle protrudes from a housing 30 and a suitable processing means, such as a grinding disc, can be arranged on the protruding part 48. In another embodiment a drill or a circular saw can be arranged on spindle 45. Use can be made of known fitting systems for rapid fitting/coupling of the processing means to the spindle.

Rotation shaft 40 and rotation axis 47 are arranged at an angle to each other, here an angle of about 90 degrees.

Spindle 45 is provided at different locations with a recess 50 in which a pin 51 of a blocking means 52 can be received. Rotation of spindle 45 around axis 47 is hereby prevented. Figure 2 shows the unlocked position, wherein pins 51 are situated in a first position. Blocking device 52 is movable as according to arrow 53 and can be operated with the hand of a user. Operating button 54 protrudes from housing 30.

A spring 55, here a spiral spring, biases the blocking device 52 in the shown first position. Pin 51 is connected to button 54.

A coupling means 60 is arranged in housing 30 and is coupled to on/off switch 31. Coupling means 60 is slidable as according to arrow 61. Coupling means 60 has a tongue 62 which, in the situation shown in figure 2, is arranged under a leg 63 of operating button 54 of blocking device 52. Because tongue 62 is placed in this position, it is not possible to move the operating button 54 of the blocking means and the pin cannot be moved from the shown first position, in which spindle 45 is free, to a second position in which the spindle is blocked. In the position shown in figure 2 the switch 31 is in the switched-on position, and the drive is therefore on.

In figure 3 the switch 31 is off. Coupling element 60 is hereby displaced as according to arrow 70 relative to the situation shown in figure 2, and it is possible to move leg 63, and thereby button 54, as according to arrow 71 from the shown first position to the second position shown in figure 4. The outer end 72 of pin 51 is received in recess 50 of spindle 45. Rotation is blocked.

Figure 2 shows a forced unlocked situation. Figure 3 shows an unforced unlocked situation and figure 4 shows the locked unforced situation. Forced and unforced relate here to the option that a determined position of the blocking means respectively cannot be changed or can be changed subject to the position of the on/off switch of the drive.

Figure 4 shows how leg 63, wherein at one end a hook 77 is formed, is hooked under an edge 78 arranged in the housing. The locked situation shown in figure 4 is maintained by hook 77.

When switch 31 is placed in the switched-on position, coupling means 60 will want to slide as according to arrow 73. The hooking part 77 under edge 78 is here pushed away and the blocking device will be moved out of the locked position and carried to the unlocked position, or first position, as according to figure 2 by the bias of spring 55.

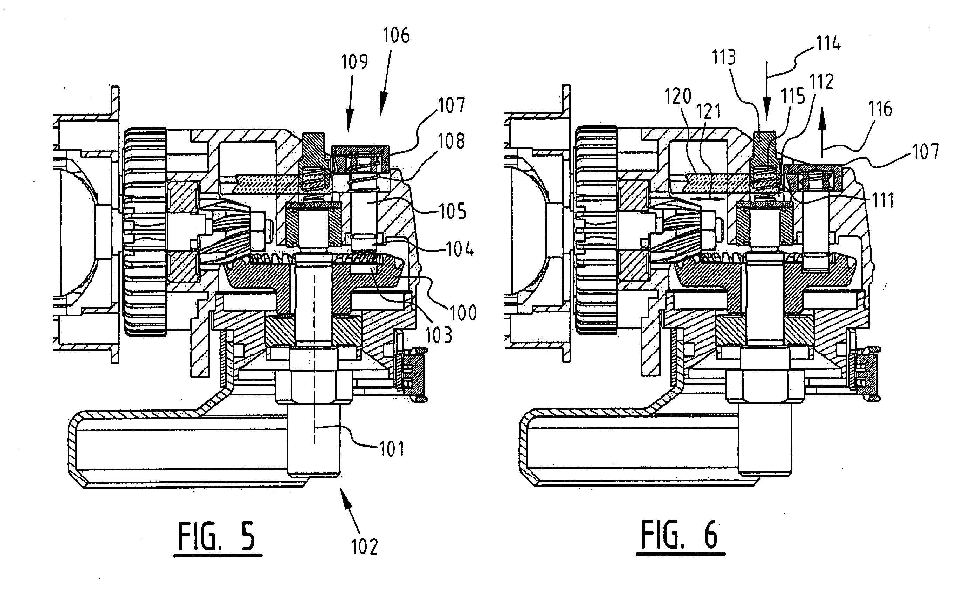

In the embodiment described immediately below and shown in figures 5-8, the coupling caused by placing switch 31 in the switched-on position, and the associated forced change in position of blocking means 52, is absent.

Figure 5 shows a third embodiment of an electrical tool provided with a blocking means. Toothed wheel 100 takes a form similar to that of the second embodiment. It can rotate around an axis 101 and a processing means can be arranged on an outer end 102. This processing means can be replaced. The toothed wheel is provided with a recess 103 in which an outer end 104 of a pin 105 can be received, this pin being part of a blocking means comprising an operating button 107 and a biasing means 108 in the form of a spiral spring.

Figure 5 shows the unlocked situation of blocking means 106. Button 107 can be operated and pressed by a user as according to an arrow 109. Figure 6 shows the pressed-in position in which the outer end 104 is received in recess 103 and the toothed wheel is blocked in its present position.

Arranged on operating button 107 is a leaf spring 111 which, in the locked position shown in figure 6, hooks under a leg 112 of a second operating button 113, this being the release button for blocking means 106. Using this separate operating button the blocking means can be taken out of the locked position.

Button 113 can be pressed by a user as according to arrow 114 counter to the bias of a spiral spring 115. During the movement of button 113 according to arrow 114 the leg 112 will end the hooking engagement of leaf spring 111, and operating button 107 will move as according to arrow 116 from the shown locked position to the unlocked position and back to the situation shown in figure 5.

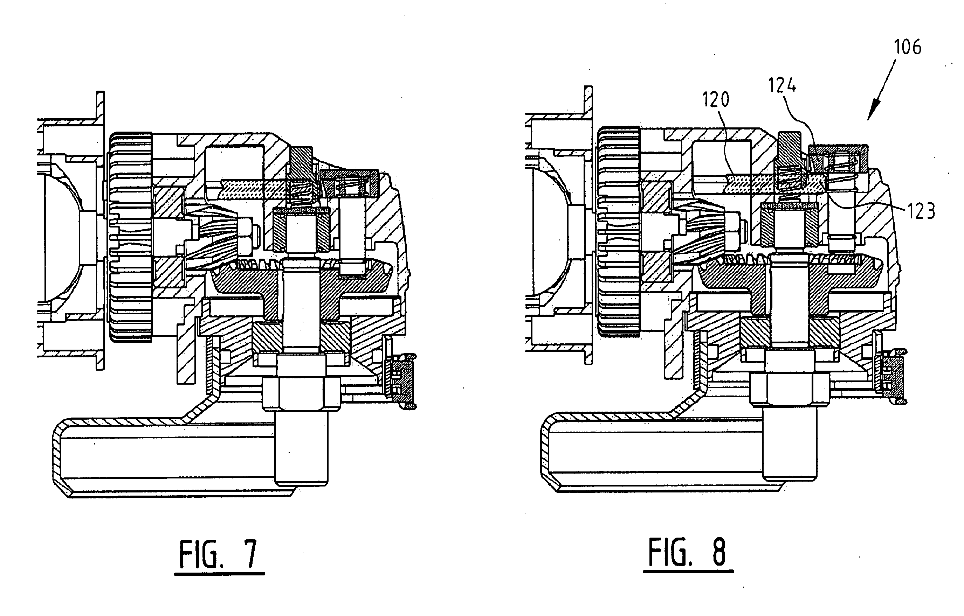

Figure 7 shows the moment at which operating button 113 is pressed and leaf spring 111 is bent out of the hooking position. Figures 5 and 6 shows situations of the tool in which switching between the first and second position of blocking means 106 is permitted. This is the situation in which the machine is not switched on.

An on/off switch (not shown) of the tool is connected to a pin 120 which is guided slidably as according to arrow 121 in the housing. Figure 8 shows a situation in which the on/off switch is in the switched-on position, whereby pin 120 is moved to the right in the drawing relative to the situation shown in figure 7 and wherein the distal end 123 is moved under a leg 124 of button 107. This prevents movement of the blocking means as according to arrow 109. This is the forced unlocked position. When the drive is switched on, pin 120 will prevent the possibility of blocking means 106 being operated, and prevents the blocking being switched on.

Is also the case that pin 120 does not act on leaf spring 111 for release thereof when the operating button (not shown) associated with pin 120 for the purpose of switching on the motor is actuated. In order to improve safety, this must only be possible to realize by pressing the unblocking button 113 in the direction of arrow 114. If pin 120 is moved to the right in figure 6 in the direction of arrow 122, it moves along leaf spring 111 and abuts or moves against the body of button 107 where leaf spring 111 is provided, and comes to a stop without the motor then having been set into operation.

Only when unblocking button 113 is actively operated will leaf spring 111 be released from leg 112 on unblocking button 113, and operating button 107 will then move upward again with the leaf spring thereon in the direction of arrow 116 in figure 6. The path is then clear for pin 120 to move under button 107 and the motor can be switched on without any danger that the operating button 107 can be operated to activate blocking of toothed wheel 100 in recess 103. The motor can thus be switched on only when the blocking has been actively terminated by operating the unblocking button 113 from a blocked position, or the blocking must not previously have been actuated at all. Conversely, the operating button can only be operated when pin 120 does not obstruct the use thereof, i.e. when the motor is not switched on.

By making use of a pin as coupling means a robust device is obtained for the purpose of the additional safety according to the invention.

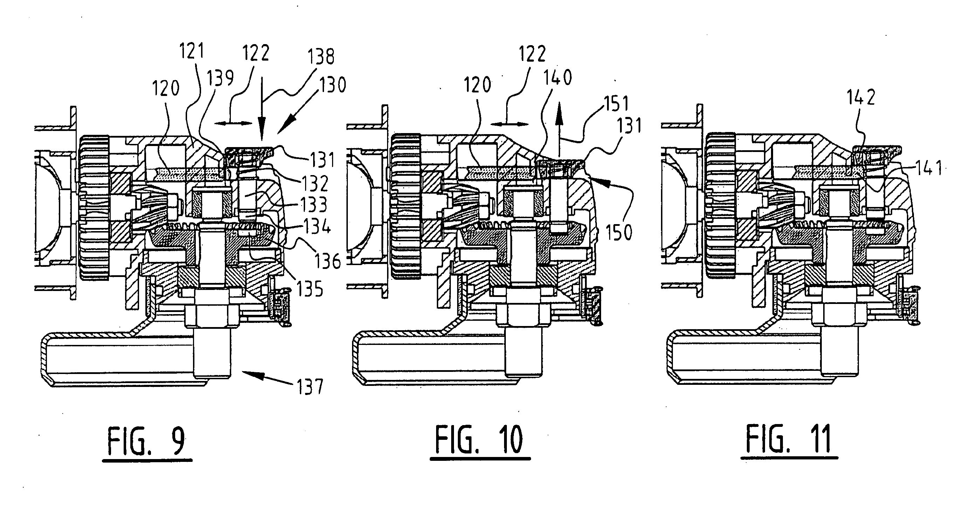

Figure 9 shows a fourth embodiment wherein the same components will not be discussed again. A coupling means 120 is connected to the on/off switch (not shown) of the device. The coupling means is accommodated in housing 121 and is slidable as according to arrow 122.

The device according to the invention is further provided with a blocking means 130 comprising an operating button 131, a biasing means 132 and a pin 133, an outer end 134 of which can be received in a recess 135 of spindle 136 to which a suitable processing means can be coupled close to an outer end 137. During changeover the spindle 136 can be secured in a position. Operating button 131 is operated here as according to arrow 138 by a user. A leaf spring 139 will herein engage hookingly on a housing part, whereby the locked position according to figure 10 can be maintained despite the biasing force of spring 132.

When the drive is switched on with a suitable switch, rod 120 can come into contact with the hooking leaf spring 139 and push this away below tongue 140 of the housing so that the blocking means is moved from the locked position as shown in figure 11 to the unlocked position in figure 9.

According to a further embodiment, coupling means 120 will be moved as according to arrow 122 to the position shown in figure 11 when the drive is switched on with the switch, wherein an outer end 141 is arranged under a leg 142 of operating button 131, whereby operation of this button from the unlocked position as shown in figure 11 to the locked position is impossible. This movement is blocked. This ensures that when the drive is switched on the blocking cannot be set into operation, whereby possible damage to either the blocking mechanism or the drive could occur.

From the locked position shown in figure 10 a user can engage operating button 131 with a finger in an engaging space 150 and pull this button out of the locked position and move it upward as according to arrow 151 to the unlocked position shown in figure 9.

Although the invention is described on the basis of preferred embodiments, the invention is not limited thereto.

## Claims

1. Electrical machine tool such as an angle grinder (1), comprising a housing (2), a drive which is accommodated in the housing and which can be connected to a power supply, which drive is coupled to a spindle (7, 12) to which a processing means (9) can be coupled, wherein a manually operable on/off switch (25, 31) coupled to the drive is arranged on the housing for on/off switching of the drive, wherein the tool further has a blocking means (20; 52; 106; 130) for the spindle (7, 12), wherein the blocking means can be operated by a user and has at least one pin (22; 51; 105; 120; 133), which is movable between a first and a second position, whereby the spindle can be moved into respectively an unlocked and a locked position, wherein the on/off switch is coupled via a coupling means (60, 120) to the blocking means which is adapted to prevent the drive being switched on at the same time as blocking is taking place,
wherein the blocking means forms with the pin in the second position a protection against the drive being switched on, and in this situation blocks switch-on of the drive with the on/off switch via the coupling means,
**CHARACTERISED BY**
an unblocking means (113) associated with the blocking means.

2. Electrical machine tool as claimed in claim 1, wherein the unblocking means (113) is adapted for selectively enabling switch-on of the drive.

3. Electrical machine tool as claimed in claim 1 or 2, wherein the unblocking means (113) is adapted to act selectively on the pin (22; 51; 105; 120; 133) in order to move this latter selectively and actively into the first position.

4. Electrical machine tool as claimed in claim 1, 2 or 3, wherein the coupling means (60; 120) is adapted, when the drive is switched on, to block displacement of the pin (22; 51; 105; 120; 133) from the first position to the second position.

5. Electrical machine tool as claimed in any of the preceding claims, wherein the coupling means (60; 120) is adapted, when the drive is switched on, to switch the pin (22; 51; 105; 120; 133) from the second position to the first position in the locked position of the spindle (7; 12).

6. Electrical machine tool as claimed in any of the foregoing claims, wherein the on/off switch is a slide switch and the coupling means (60; 120) comprises a slidable element.

7. Electrical machine tool as claimed in any of the foregoing claims, wherein the coupling means (60; 120) is movable in a path of the pin (22; 51; 105; 120; 133).

8. Electrical machine tool as claimed in any of the foregoing claims, wherein the spindle (7; 12) is provided with a recess in which the pin (22; 51; 105; 120; 133) can be received.

9. Electrical machine tool as claimed in any of the foregoing claims, wherein the blocking means (20; 52; 106; 130) has an element for holding the pin (22; 51; 105; 120; 133) releasably in the second position, and the coupling means (60; 120) is adapted to unblock the blocking means.

10. Electrical machine tool as claimed in claim 9, wherein the blocking means (20; 52; 106; 130) comprises a hooking element.

11. Electrical machine tool as claimed in claim 9 or 10, wherein the hooking element comprises a leaf spring (111; 139).

12. Electrical machine tool as claimed in claim 10 or 11, wherein the coupling means (60; 120) comprises a movable element which is adapted to engage the hooking element and to unblock the blocking means (20; 52; 106; 130), when the drive is switched on.

13. Electrical machine tool as claimed in any of the foregoing claims, wherein the spindle (7; 12) is provided with teeth on a side thereof which engage on the drive.

14. Electrical machine tool as claimed in any of the foregoing claims, wherein the blocking means (20; 52; 106; 130) comprises a biasing means, such as a resilient means, which biases the pin to the first position.

## Patentansprüche

1. Elektrowerkzeug wie ein Winkelschneider (1), enthaltend ein Gehäuse (2), einen Antrieb, der in das Gehäuse aufgenommen ist und mit einer Stromquelle verbunden werden kann, wobei der Antrieb mit einer Spindel (7,12) gekoppelt ist, mit der ein Bearbeitungsmittel (9) gekoppelt werden kann, wobei ein manuell betätigbarer Ein/Aus-Schalter (25,31), der mit dem Antrieb gekoppelt ist, auf dem Gehäuse angeordnet ist, um den Antrieb ein/aus zu schalten, wobei das Werkzeug ferner ein Blockierungsmittel (20; 52; 106; 130) für die Spindel (7,12) hat, wobei das Blockierungsmittel von einem Benutzer betätigt werden kann und wenigstens einen Stift (22; 51; 105; 120; 133) hat, der zwischen einer ersten und einer zweiten Position bewegbar ist, wodurch die Spindel jeweils in eine unverriegelte und eine verriegelte Position bewegt werden kann, wobei der Ein/Aus Schalter über ein Kopplungsmittel (60, 120) mit dem Blockierungsmittel gekoppelt ist, das geeignet ist, zu verhindern, dass der Antrieb eingeschaltet wird zu derselben Zeit, wenn die Blockierung stattfindet,
wobei das Blockierungsmittel mit dem Stift in der zweiten Position einen Schutz dagegen bildet, dass der Antrieb eingeschaltet wird, und in dieser Situation das Einschalten des Antriebs mit dem Ein/Aus Schalter über das Kopplungsmittel blockiert,
**gekennzeichnet durch**
ein Freigabemittel (113), das mit dem Blockierungsmittel verbunden ist.

2. Elektrowerkzeug nach Anspruch 1, wobei das Freigabemittel (113) geeignet ist, wahlweise das Einschalten des Antriebs zu ermöglichen.

3. Elektrowerkzeug nach Anspruch 1 oder 2, wobei das Freigabemittel (113) geeignet ist, wahlweise auf den Stift (22; 51; 105; 120; 133) einzuwirken, um diesen wahlweise und aktiv in die erste Position zu bewegen.

4. Elektrowerkzeug nach Anspruch 1, 2 oder 3, wobei das Kopplungsmittel (60; 120) dann, wenn der Antrieb eingeschaltet ist, geeignet ist, die Verlagerung des Stiftes (22; 51; 105; 120; 133) von der ersten Position in die zweite Position zu blockieren.

5. Elektrowerkzeug nach jedem der vorhergehenden Ansprüche, wobei das Kopplungsmittel (60; 120) dann, wenn der Antrieb eingeschaltet ist, geeignet ist, den Stift (22; 51; 105; 120; 133) von der zweiten Position in die erste Position in der verriegelten Position der Spindel (7; 12) zu schalten.

6. Elektrowerkzeug nach jedem der vorhergehenden Ansprüche, wobei der Ein/Aus Schalter ein Gleitschalter ist, und das Kopplungsmittel (60; 120) ein verschiebbares Element enthält.

7. Elektrowerkzeug nach jedem der vorhergehenden Ansprüche, wobei das Kopplungsmittel (60; 120) in eine Bahn des Stiftes (22; 51; 105; 120; 133) bewegbar ist.

8. Elektrowerkzeug nach jedem der vorhergehenden Ansprüche, wobei die Spindel (7; 12) mit einer Aussparung versehen ist, in die der Stift (22; 51; 105; 120; 133) aufgenommen werden kann.

9. Elektrowerkzeug nach jedem der vorhergehenden Ansprüche, wobei das Blockierungsmittel (20; 52; 106; 130) ein Element zum lösbaren Halten des Stiftes (22; 51; 105; 120; 133) in der zweiten Position hat und das Kopplungsmittel (60; 120) geeignet ist, das Blockierungsmittel frei zu geben.

10. Elektrowerkzeug nach Anspruch 9, wobei das Blockierungsmittel (20; 52; 106; 130) ein Hakenelement enthält.

11. Elektrowerkzeug nach Anspruch 9 oder 10, wobei das Hakenelement eine Blattfeder (111; 139) enthält.

12. Elektrowerkzeug nach Anspruch 10 oder 11, wobei das Kopplungsmittel (60; 120) ein bewegliches Element enthält, das geeignet ist, das Hakenelement zu ergreifen und das Blockierungsmittel (20; 52; 106; 130) frei zu geben, wenn der Antrieb eingeschaltet wird.

13. Elektrowerkzeug nach jedem der vorhergehenden Ansprüche, wobei die Spindel (7; 12) mit Zähnen an einer Seite versehen ist, die in den Antrieb eingreifen.

14. Elektrowerkzeug nach jedem der vorhergehenden Ansprüche, wobei das Blockierungsmittel (20; 52; 106; 130) ein Vorspannmittel wie ein elastisches Mittel aufweist, das den Stift in die erste Position vorspannt.

## Revendications

1. Machine outil électrique telle qu'une meuleuse d'angle (1), comprenant un boîtier (2), un dispositif d'entraînement qui est logé dans le boîtier et qui peut être raccordé à une alimentation de courant, lequel dispositif d'entraînement est couplé à une broche (7, 12) à laquelle des moyens de traitement (9) peuvent être couplés, dans laquelle un interrupteur de marche/arrêt (25, 31) pouvant être actionné manuellement, couplé au dispositif d'entraînement est agencé sur le boîtier pour mettre en marche/arrêter le dispositif d'entraînement, dans laquelle l'outil a en outre des moyens de blocage (20 ; 52 ; 106 ; 130) pour la broche (7, 12), dans laquelle les moyens de blocage peuvent être actionnés par un utilisateur et ont au moins un axe (22 ; 51 ; 105 ; 120 ; 133) qui est mobile entre une première et une seconde position, moyennant quoi la broche peut être déplacée dans une position débloquée et bloquée respectivement, dans laquelle l'interrupteur de marche/arrêt est couplé via des moyens de couplage (60, 120) aux moyens de blocage qui sont adaptés pour empêcher la mise en marche du dispositif d'entraînement au moment où le blocage a lieu,
dans laquelle les moyens de blocage forment avec l'axe dans la seconde position, une protection contre la mise en marche du dispositif d'entraînement, et dans cette situation, bloquent la mise en marche du dispositif d'entraînement avec l'interrupteur de marche/arrêt via les moyens de couplage,
**caractérisée par**
des moyens de déblocage (113) associés avec les moyens de blocage.

2. Machine outil électrique selon la revendication 1, dans laquelle les moyens de déblocage (113) sont adaptés pour permettre sélectivement la mise en marche du dispositif d'entraînement.

3. Machine outil électrique selon la revendication 1 ou 2, dans laquelle les moyens de déblocage (113) sont adaptés pour agir sélectivement sur l'axe (22 ; 51 ; 105 ; 120 ; 133) afin de déplacer ce dernier sélectivement et activement dans la première position.

4. Machine outil électrique selon la revendication 1, 2 ou 3, dans laquelle les moyens de couplage (60 ; 120) sont adaptés, lorsque le dispositif d'entraînement est mis en marche, pour empêcher le déplacement de l'axe (22 ; 51 ; 105 ; 120 ; 133) de la première position à la seconde position.

5. Machine outil électrique selon l'une quelconque des revendications précédentes, dans laquelle les moyens de couplage (60 ; 120) sont adaptés, lorsque le dispositif d'entraînement est mis en marche, pour faire passer l'axe (22 ; 51 ; 105 ; 120 ; 133) de la seconde position à la première position dans la position bloquée de la broche (7 ; 12).

6. Machine outil électrique selon l'une quelconque des revendications précédentes, dans laquelle l'interrupteur de marche/arrêt est un interrupteur coulissant et les moyens de couplage (60 ; 120) comprennent un élément pouvant coulisser.

7. Machine outil électrique selon l'une quelconque des revendications précédentes, dans laquelle les moyens de couplage (60 ; 120) sont mobiles dans une trajectoire de l'axe (22 ; 51 ; 105 ; 120 ; 133).

8. Machine outil électrique selon l'une quelconque des revendications précédentes, dans laquelle la broche (7 ; 12) est prévue avec un évidement dans lequel l'axe (22 ; 51 ; 105 ; 120 ; 133) peut être reçu.

9. Machine outil électrique selon l'une quelconque des revendications précédentes, dans laquelle les moyens de blocage (20 ; 52 ; 106 ; 130) ont un élément pour maintenir l'axe (22 ; 51 ; 105 ; 120 ; 133) de manière amovible dans la seconde position, et les moyens de couplage (60 ; 120) sont adaptés pour débloquer les moyens de blocage.

10. Machine outil électrique selon la revendication 9, dans laquelle les moyens de blocage (20 ; 52 ; 106 ; 130) comprennent un élément formant crochet.

11. Machine outil électrique selon la revendication 9 ou 10, dans laquelle l'élément formant crochet comprend un ressort à lames (111 ; 139).

12. Machine outil électrique selon la revendication 10 ou 11, dans laquelle les moyens de couplage (60 ; 120) comprennent un élément mobile qui est adapté pour mettre en prise l'élément formant crochet et pour débloquer les moyens de blocage (20 ; 52 ; 106 ; 130) ; lorsque le dispositif d'entraînement est mis en marche.

13. Machine outil électrique selon l'une quelconque des revendications précédentes, dans laquelle la broche (7 ; 12) est prévue avec des dents sur son côté qui se mettent en prise sur le dispositif d'entraînement.

14. Machine outil électrique selon l'une quelconque des revendications précédentes, dans laquelle les moyens de blocage (20 ; 52 ; 106 ; 130) comprennent des moyens de sollicitation, telles que des moyens élastiques, qui sollicitent l'axe dans la première position.
